# EUROPÄISCHE PATENTSCHRIFT

(11) **EP 0 891 430 B1**
(45) Veröffentlichungstag und Bekanntmachung des Hinweises auf die Patenterteilung: **03.11.1999**
(21) Anmeldenummer: 97915457.2
(22) Anmeldetag: 27.03.1997
(51) Int. Cl.: C14C 9/00, C14C 9/02, C14C 3/28

(54) **VERWENDUNG VON COPOLYMERISATEN AUF BASIS ETHYLENISCH UNGESÄTTIGTER DICARBONSÄUREN ODER DICARBONSÄUREANHYDRIDE, NIEDERER OLEFINE UND HYDROPHOBER COMONOMERER ZUM NACHGERBEN, FETTEN ODER HYDROPHOBIEREN VON LEDER UND PELZFELLEN**
USE OF COPOLYMERS BASED ON ETHYLENICALLY UNSATURATED DICARBOXYLIC ACIDS OR DICARBOXYLIC ACID ANHYDRIDES, LOWER OLEFINS AND HYDROPHOBIC COMONOMERS FOR AFTER-TANNING, STUFFING OR WATERPROOFING LEATHER AND FURS
UTILISATION DE COPOLYMERISATS A BASE D'ACIDES DICARBOXYLIQUES OU D'ANHYDRIDES D'ACIDES DICARBOXYLIQUES ETHYLENIQUEMENT INSATURES, D'OLEFINES INFERIEURES ET DE COMONOMERES HYDROPHOBES POUR LE RETANNAGE, LA MISE EN SUIF ET L'IMPERMEABILISATION DU CUIR ET DES FOURRURES

(30) Priorität: 01.04.1996 DE 19612986
(43) Veröffentlichungstag der Anmeldung: 20.01.1999
(73) Patentinhaber: BASF AKTIENGESELLSCHAFT, 67056 Ludwigshafen (DE)
(72) Erfinder: KNEIP, Michael, D-67069 Ludwigshafen (DE); KISTENMACHER, Axel, 67098 Bad Dürkheim (DE); DANISCH, Peter, D-67065 Ludwigshafen (DE); WOLF, Gerhard, D-68775 Ketsch (DE)
(74) Vertreter: Isenbruck, Günter, Dr.
(86) Internationale Anmeldenummer: EP9701593
(87) Internationale Veröffentlichungsnummer: WO9737046

(56) Entgegenhaltungen:
- EP-A- 0 216 089
- EP-A- 0 581 327
- DE-A- 4 129 244
- DE-A- 4 402 029

## Beschreibung

Die Erfindung betrifft die Verwendung von wäßrigen Lösungen oder Dispersionen von Copolymerisaten auf Basis ethylenisch ungesättigter Dicarbonsäuren oder Dicarbonsäureanhydride, niederer Olefine und hydrophober Comonomerer zum Nachgerben, Fetten oder Hydrophobieren von Leder und Pelzfellen, sowie bestimmte der verwendeten Copolymerisate, Verfahren zu ihrer Herstellung, und diese enthaltende Lederbehandlungsmittel.

Aus der DE-C 2 629 748 ist die Verwendung von mit Alkalimetallbasen oder Aminen verseiften Copolymerisaten aus linearen C₁₀- bis C₃₀-Olefinen und Maleinsäureanhydrid zum Füllen und Fetten von Leder und Pelzfellen bekannt.

Aus der EP-A-0 412 389 ist die Verwendung von wäßrigen Lösungen oder Dispersionen von partiell neutralisierten Copolymerisaten von Maleinsäureanhydrid mit C₈- bis C₄₀- Olefinen wie auch deren polymeranalogen Umsetzungsprodukten zum Hydrophobieren von Ledern und Pelzfellen bekannt. Als Olefinkomponenten werden beispielsweise 1-Octen, Diisobuten, 1-Decen, 1-Dodecen, 1-Tetradecen, 1-Hexadecen und Cycloocten genannt. Es wird in Substanz polymerisiert.

Aus der EP-B-0 486 608 ist die Verwendung von Copolymerisaten auf Basis von Maleinsäureanhydrid, Octadecylvinylether und gegebenenfalls n-Octadecen-1 zum Hydrophobieren von Leder und Pelzfellen bekannt.

In EP-A-0 579 267, EP-A-0 581 327, EP-A-0 372 746 und EP-A-0 498 634 sind amphiphile Copolymerisate, bestehend aus einem Gewichtsüberschuß eines hydrophoben und einem Gewichtsunterschuß eines hydrophilen Comonomeres und ihre Verwendung zur Lederbehandlung beschrieben.

Die gemäß EP-A-0 581 327 und EP-A-0 498 634 als nachgerbende Fettungsmittel zur Herstellung von Automobilledern mit verbesserten "Fogging"-Eigenschaften verwendeten Copolymerisate werden vorzugsweise nach der Methode der Emulsionspolymerisation hergestellt. Auf diese Weise hergestellte Dispersionen enthalten aber gewisse Anteile an oberflächenaktiven Tensiden. Dies ist nachteilig bei der Behandlung von Leder mit diesen Mitteln, weil sie die Wasserbenetzbarkeit erhöhen, so daß die Herstellung von wasserabweisenden Ledern erschwert wird.

Aus der DE-A-4 334 796 sind Veresterungsprodukte von Terpolymerisaten aus Maleinsäureanhydrid, Diisobuten und Styrol, bestimmten Styrolderivaten, Vinylacetat, Allylacetat, Isobutylvinylether, Allylalkohol oder Methallylalkohol mit Fettalkoholen als Nachgerbstoffe für Leder bekannt.

In der prioritätsälteren, nicht vorveröffentlichten deutschen Patentanmeldung mit dem Aktenzeichen 196 08 044.4 mit dem Titel "Verwendung von hydrophobmodifizierten Copolymerisaten aus monoethylenisch ungesättigten Dicarbonsäuren und Olefinen mit 2 bis 8 C-Atomen in Wasch- und Reinigungsmitteln" sind Terpolymere aus Isobuten, Maleinsäureanhydrid und C₂₀₋₂₄-Olefin beschrieben, die mit Natronlauge neutralisiert sind. Anstelle von C₂₀₋₂₄-Olefin wird auch 1-Octadecen verwendet. Die Polymere werden als Zusatz zu Wasch- und Reinigungsmitteln eingesetzt. Es wird in allgemeiner Form auf Copolymere hingewiesen, die aus monoethylenisch ungesättigten Dicarbonsäuren, deren Anhydriden oder Alkali- und/oder Ammoniumsalzen, Olefinen mit 3 bis 8 C-Atomen, Olefinen mit 10 bis 150 C-Atomen und anderen Comonomeren bestehen.

Die für die Nachgerbung, Fettung und insbesondere Hydrophobierung von Leder bekannten Polymere weisen oftmals den Nachteil auf, daß sie nur in oberflächennahe Schichten der Fleisch- oder Narbenseite des Leders eindringen, so daß eine Hydrophobierung des gesamten Lederquerschnitts nicht erreicht wird. Darüber hinaus werden Anfärbbarkeit und Griff des Leders oft verschlechtert.

Weiterhin neigen die bekannten Dispersionen, die für die Nachgerbung, Fettung oder Hydrophobierung entwickelt worden sind, häufig zur Koagulation oder Verdickung bei der Lagerung. Durch solche lagerungsbedingten Veränderungen erfährt das Penetrationsverhalten dieser Produkte eine weitere Verschlechterung.

Handelsübliche polymere Nachgerbstoffe sind oft hydrophil und sind zur Hydrophobierung von Leder wenig geeignet. Andererseits besitzen polymere Hydrophobiermittel ebenfalls nachgerbende, füllende Eigenschaften, aber verteilen sich nicht immer gut über den Lederquerschnitt. Je nach der Vorgeschichte des eingesetzten wet-blue (= Zwischenprodukt der Lederherstellung, das weltweit gehandelt wird und im Verarbeitungsprozeß zwischen Haut und fertigem Leder steht) erhält man unterschiedliche Ergebnisse. Da heute vielfach wet-blues aus verschiedenen Quellen zugekauft wird und somit unterschiedliche Vorgeschichten aufweist, erhält der Gerber in seiner Produktion keine gleichmäßigen Ergebnisse.

Der vorliegenden Erfindung liegt die Aufgabe zugrunde, geeignete hydrophobe Nachgerbstoffe auf Polymerbasis zur Verfügung zu stellen, die eine gute Penetration durch den Lederquerschnitt ermöglichen und die Hydrophobierung und/oder Fettung unterstützen. Sie sollen Nachteile der bekannten Nachgerbstoffe überwinden.

Diese Aufgabe wird gelöst durch die Verwendung von wäßrigen Lösungen oder Dispersionen von Copolymerisaten, die durch radikalische Copolymerisation von
(a) 20 bis 90 Gew.-% mindestens einer monoethylenisch ungesättigten C₄₋₆-Dicarbonsäure oder deren Anhydrids als Komponente A,
(b) 5 bis 50 Gew.-% mindestens eines Olefins mit 2 bis 6 Kohlenstoffatomen als Komponente B,
(c) 5 bis 50 Gew.-% mindestens eines hydrophoben Comonomeren aus der Gruppe der langkettigen Olefine mit mindestens 10 Kohlenstoffatomen, Ester von langkettigen Alkoholen mit mindestens 8 Kohlenstoffatomen mit Acrylsäure oder Methacrylsäure, Amide von langkettigen Amiden mit mindestens 8 Kohlenstoffatomen mit Acrylsäure oder Methacrylsäure und der langkettigen Alkylvinylether mit mindestens 8 Kohlenstoffatomen als Komponente C,
(d) 0 bis 40 Gew.-% weiteren mit obigen Monomeren copolymerisierbaren Comonomeren als Komponente D,
wobei die Summe der Mengen der Komponenten A, B, C und gegebenenfalls D 100 Gew.-% ergibt,
und anschließender zumindest partieller Veresterung oder Hydrolyse und Neutralisation und/oder Umsetzung der bei der Hydrolyse entstehenden Carboxylgruppen mit Basen erhältlich sind, zum Behandeln von Leder und/oder Pelzfellen.

Sie wird außerdem gelöst durch Bereitstellung von Copolymerisat, erhältlich durch radikalische Copolymerisation von
(a) 20 bis 89 Gew.-% mindestens einer monoethylenisch ungesättigten C₄₋₆-Dicarbonsäure oder deren Anhydrids als Komponente A,
(b) 5 bis 50 Gew.-% mindestens eines Olefins mit 2 bis 6 Kohlenstoffatomen als Komponente B,
(c) 5 bis 50 Gew.-% mindestens eines hydrophoben Comonomeren aus der Gruppe der langkettigen Olefine mit mindestens 10 Kohlenstoffatomen , Ester von langkettigen Alkoholen mit mindestens 8 Kohlenstoffatomen mit Acrylsäure oder Methacrylsäure, Amide von langkettigen Amiden mit mindestens 8 Kohlenstoffatomen mit Acrylsäure oder Methacrylsäure und der langkettigen Alkylvinylether mit mindestens 8 Kohlenstoffatomen als Komponente C,
(d) 1 bis 15 Gew.-% weiteren mit obigen Monomeren copolymerisierbaren Comonomeren als Komponente D,
wobei die Summe der Mengen der Komponenten A, B, C und D 100 Gew.-% ergibt, und gegebenenfalls anschließender zumindest partieller Veresterung oder Hydrolyse und Neutralisation und/oder Umsetzung der bei der Hydrolyse entstehenden Carboxylgruppen mit Basen.

Es wurde gefunden, daß die erfindungsgemäß verwendeten Polymere beide Forderungen erfüllten: gute Produktverteilung über den Lederquerschnitt und eine für die Hydrophobierung der Leder nicht nachteilige, sondern unterstützende Wirkung.

Gegenstand der Erfindung ist insbesondere die Verwendung von wäßrigen Lösungen oder Dispersionen dieser Copolymerisate als Mittel zum Nachgerben, Fetten oder Hydrophobieren von Leder und/oder Pelzfellen.

Die im Copolymerisat vorhandenen Anydridgruppen können allerdings auch partiell oder vollständig mit hydroxyfunktionellen Verbindungen oder Aminen solvolysiert werden. Beispiele hierfür sind Mono-, Di- oder Triethanolamin, Morpholin, Sarcosin. Die gegebenenfalls verbleibenden Anhydridgruppen werden einer wäßrigen Hydrolyse unterzogen. Die verbleibenden Carboxylgruppen werden vorzugsweise mit Basen zumindest teilweise neutralisiert. Als Basen können beispielsweise Alkali- und Erdalkalihydroxide, Alkali- und Erdalkalicarbonate, Ammoniak oder Amine eingesetzt werden.

Die beschriebenen Copolymerisate werden als Nachgerbstoffe verwendet, die dem Leder gute Fülle, Durchfärbung und einen angenehmen Griff verleihen. Darüber hinaus verbessern sie die Verteilung des Hydrophobier- bzw. Fettungsmittels und erhöhen den hydrophoben Charakter des Leders.

Es wurde gefunden, daß Copolymerisate aus beispielsweise Maleinsäureanhydrid, einem kurzkettigen und einem langkettigen Olefin Leder gut penetrieren und gleichzeitig die Hydrophobierung unterstützen.

Für eine optimale Hydrophobierwirkung wird zusätzlich am Ende der Nachgerbung die übliche Metallsalzfixierung mit z.B Cr³⁺, Al³⁺ oder Zr⁴⁺-Salzen angeschlossen. Außer in der Nachgerbung können die beschriebenen Copolymerisate aufgrund ihrer ausgezeichneten Säure- und Elektrolytstabilität auch in der Chromgerbung oder auch in der Entsäuerung eingesetzt werden. Die beschriebenen Copolymerisate können außerdem anteilig in Hydrophobiermitteln auf Basis von langkettigen Kohlenwasserstoffen, wie Paraffin(öl)en, Mineralölen oder Wachsen verwendet werden.

Die beschriebenen Copolymerisate können vorteilhaft in allen Stufen der Leder-Herstellung verwendet werden, wo konventionelle Tenside bzw. Emulgatoren oder Dispergatoren, wie Nio-Tenside, die Hydrophobierung des Leders erschweren, oder - je nach Anforderungen - sogar unmöglich machen. Daher können die erfindungsgemäßen Copolymerisate auch in Fettungsmitteln als Dispergier- bzw. Emulgierhilfsmittel mitverwendet werden. Die verwendete Menge des erfindungsgemäßen Copolymerisate beträgt hierfür 1 bis 50 Gew.-%, insbesondere 2 bis 20 Gew.-%, ganz besonders 4 bis 16 Gew.-%.

Weiterhin eignen sich die beschriebenen Copolymerisate auch als Bestandteile von Mitteln zur Entfettung von Ledern und Pelzfellen, die notwendig sind, um eine Entfernung des Naturfettes aus den tierischen Häuten durchzuführen, da eine ungenügende Entfettung zu einer ungleichmäßigen Gerbung und Färbung führt und durch bakteriellen Abbau der Fette und Kristallisation bestimmter Fettsäuren während der Lagerung zu Fettausschlägen führt. Daher wird - aus vor allem ökologischen Gründen - eine Emulgatorentfettung durchgeführt, bei der anionische und nicht ionische Tenside sowie Mischungen dieser beiden Typen verwendet werden. Durch die Mitverwendung der beschriebenen Copolymerisate kann der Anteil an Tensiden verringert werden.

Darüber hinaus lassen sich in hervorragender Weise die beschriebenen Copolymerisate in Mischungen mit synthethischen aromatischen Gerbstoffen oder deren Vorprodukten bzw. deren Natrium- oder Ammoniumsalze kombinieren und damit eine synergistische Kombination von Effekten erreichen. So erhält man auf diese Weise Leder, die sich besonders durch eine gute Fülle, gute Weichheit, runden Griff, eine wesentlich verbesserte Durchfärbung und eine wesentlich verbesserte Hydrophobierung auszeichnen. Dabei lassen sich mit derartigen Kombinationen insgesamt Einsparungen an eingesetzten Gerbstoffen verwirklichen und damit eine Verbesserung der Wirtschaftlichkeit der Lederherstellung erhalten.

Zunächst werden die Komponenten der Copolymerisate beschrieben.

### KOMPONENTE A

Als Monomere der Komponente A kommen monoethylenisch ungesättigte Dicarbonsäureanhydride mit 4 bis 6 Kohlenstoffatomen in Frage, wie Maleinsäureanhydrid, Itaconsäureanhydrid, Citraconsäureanhydrid und deren Mischungen untereinander. Bevorzugt ist Maleinsäureanhydrid. Komponente A wird vorzugsweise in Mengen von 40 bis 80, besonders bevorzugt 50 bis 70 Gew.-% eingesetzt.

### KOMPONENTE B

Als Monomere der Komponente B werden lineare, verzweigte oder cyclische aliphatische Olefine mit 2 bis 6 Kohlenstoffatomen verwendet, wie Ethen, Propen, 1-Buten, Cyclobuten, Methylencyclopropan, Isobuten, 1-Penten, Cyclopenten, Methylencyclobutan, 2-Methyl-1-buten, 3-Methyl-1-buten, 1-Hexen, Cyclohexen, Methylencyclopenten, 2,3-Dimethyl-1-buten, 3,3-Dimethyl-1-buten, 2-Ethyl-1-buten, 2-Methyl-1-penten, 3-Methyl-1-penten, 4-Methyl-1-penten, oder Mischungen daraus. Bevorzugt sind Ethen, Propen, 1-Buten, Isobuten, 1-Penten, Cyclopenten, 1-Hexen, Cyclohexen oder Mischungen daraus. Komponente B wird vorzugsweise in Mengen von 10 bis 40, besonders bevorzugt 10 bis 30 Gew.-% eingesetzt.

### KOMPONENTE C

Als Monomere der Komponente C werden vorzugsweise aliphatische Olefine mit mindestens 10 Kohlenstoffatomen eingesetzt. Dies sind beispielsweise 1-Decen, 1-Dodecen, 1-Tetradecen, 1-Hexadecen, 1-Octadecen, 1-Eicosen, 1-Docosen, 1-Tetracosen, 1-Hexacosen, 1-Octacosen, 1-Triaconten, 1-Dotriaconten, 1-Tetratriaconten, 1-Hexatriaconten, 1-Octatriaconten, 1-Tetraconten, 1-Dotewaconten, 1-Tetratetraconten, 1-Hexatetraconten, 1-Octatetraconten, 1-Pentaconten, 1-Hexaconten oder technische Olefinmischungen, wie C₁₂₋₁₄-Olefine, C₂₀₋₂₄-Olefine, C₂₄₋₂₈-Olefine, C₃₀₊-Olefine oder metallocenkatalytisch hergestellte Oligoolefine, wie Oligopropen, Oligohexen und Oligooctadecen, oder durch kationische Polymerisation hergestellte Olefine mit hohem α-Olefin-Anteil, wie Polyisobuten oder Mischungen aus verschiedenen dieser Olefine.

Weiterhin werden als Monomere der Komponente C Ester der Acrylsäure oder der Methacrylsäure mit Alkoholen mit mindestens 8 Kohlenstoffatomen verwendet. Dies sind beispielsweise 2-Ethylhexyl(meth)acrylat, Decyl(meth)acrylat, Lauryl(meth)acrylat, Isotridecyl(meth)acrylat, Tetradecyl(meth)acrylat, Stearyl (meth)acrylat, Palmityl(meth)acrylat, n-Eicosyl(meth)acrylat oder (Meth)acrylsäureester von Alkoholgemischen, wie z.B. C₁₂₋₁₄-Fettalkohol, C₁₃₋₁₅-Oxoalkohol, C₁₆₋₁₈-Fettalkohol, C₁₂₋₁₈-Fettalkohol oder (Meth)acrylsäureester von alkoxilierten Alkoholen oder Alkoholmischungen mit mindestens 8 Kohlenstoffatomen.

Weiterhin werden als Monomere der Komponente C Amide der Acrylsäure oder der Methacrylsäure mit Aminen mit mindestens 8 Kohlenstoffatomen verwendet. Dies sind beispielsweise N-Dodecyl(meth)acrylamid und N-Octadecyl(meth)acrylamid.

Weiterhin werden als Monomere der Komponente C Alkylvinylether mit mindestens 8 Kohlenstoffatomen in der Alkylkette verwendet. Dies sind beispielsweise n-Octylvinylether, 2-Ethylhexylvinylether, 2,2,4-Trimethylpentylvinylether, n-Decylvinylether, Dodecylvinylether, n-Hexadecylvinylether, n-Octadecylvinylether und Mischungen daraus.

Weiterhin können als Monomere der Komponente C Fluorolefine mit mindestens 6 C-Atomen verwendet werden. Dies sind z.B. Perfluoroctylethen oder Perfluordecylethen.

Bevorzugt werden als Monomere der Komponente C aliphatische Olefine mit mindestens 10 Kohlenstoffatomen verwendet.

Komponente C wird vorzugsweise in Mengen von 5 bis 30, besonders bevorzugt 5 bis 25 Gew.-% eingesetzt.

### KOMPONENTE D

Als Monomere der Komponente D werden bevorzugt Acrylsäure, Methacrylsäure, Methylvinylether, Ethylvinylether, 2-Acrylamido-2-methylpropansulfonsäure, Methyl(meth)acrylat, Ethyl(meth)acrylat, Butyl(meth)acrylat, Hydroxyethyl(meth)acrylat, Hydroxypropyl(meth)acrylat, 1- oder 2-(N,N-Dimethyl-amino)-ethyl(meth)acrylat, 3-(N,N-Dimethylamino)propyl(meth)acrylat, 3-Dimethyl-aminopropyl(meth)acrylamid, Vinylacetat, Vinylpropionat, N-Vinylformamid, Styrol, α-Methylstyrol, N-Vinylpyrrolidon, N-Vinylimidazol, Acrylnitril, Acrolein, Methacrolein oder deren Mischungen eingesetzt.

Vorzugsweise werden Acrylsäure, Methacrylsäure, Methylmethacrylat, 1- oder 2-N,N-Dimethylaminoethylacrylat, Styrol oder deren Mischungen eingesetzt. Komponente D wird vorzugsweise in Mengen von 0 bis 30, besonders bevorzugt 0 bis 15 Gew.-% eingesetzt.

Die Summen der Mengen der Komponenten A, B, C und gegebenenfalls D ergibt immer 100 Gew.-%. Wird ein Copolymerisat aus Komponenten A, B, C und D eingesetzt, so betragen die Mengen der vorstehenden Componenten
A: 20 bis 90, vorzugsweise 40 bis 80, besonders bevorzugt 50 bis 70 Gew.-%,
B: 5 bis 50, vorzugsweise 10 bis 40, besonders bevorzugt 10 bis 30 Gew.-%,
C: 5 bis 50, vorzugsweise 5 bis 30, besonders bevorzugt 5 bis 25 Gew.-%,
D: 1 bis 40, vorzugsweise 2 bis 20, besonders bevorzugt 3 bis 15 Gew.-%,

In einer speziellen Ausführungsform beträgt die Menge der Komponente D 1 bis 15, vorzugsweise 2 bis 13, insbesondere 3 bis 12,5 Gew.-%. Die Erfindung betrifft auch Copolymerisate, die diesen speziellen Gehalt an Komponente D und die vorstehend aufgeführten Gehalte der Komponente A, B und C aufweisen. In diesen Copolymerisaten wird vorzugsweise als Komponente A mindestens ein Comonomer aus der Gruppe Maleinsäureanhydrid, Itaconsäureanhydrid und Citraconsäureanhydrid, vorzugsweise Maleinsäureanhydrid und/oder als Komponente B mindestens ein Comonomer aus der Gruppe Ethen, Propen, 1-Buten, Isobuten, 1-Hexen, Cyclopenten, Cyclohexen und/oder als Komponente C mindestens ein Comonomer aus aliphatischen Olefinen mit mindestens 10 C-Atomen und/oder als Komponente D mindestens ein Comonomer aus der Gruppe Acrylsäure, Methacrylsäure, Methylvinylehter, Ethylvinylether, 2-Acrylamido-2-methylpropansulfonsäure, Methyl(meth)acrylat, Ethyl(meth)acrylat, Butyl(meth)acrylat, Hydroxyethyl(meth)acrylat, Hydroxypropyl(meth)acrylat, 2-(N,N-Dimethylamino)ethyl(meth)acrylat, 3-(N,N-Dimethylamino)propyl(meth)acrylat, 3-Dimethylaminopropyl(meth)acrylamid, Vinylacetat, Vinylpropionat N-Vinylformamid, Styrol, α-Methylstyrol, N-Vinylpyrrolidon, N-Vinylimidazol, Acrylnitril, Acrolein und Methacrolein bei der Copolymerisation eingesetzt.

Die Erfindung betrifft darüber hinaus Copolymerisate, erhältlich durch radikalische Copolymerisation von
(a) 20 bis 89 Gew.-% mindestens einer monoethylenisch ungesättigten C₄- bis C₆-Dicarbonsäure oder deren Anhydrid als Komponente A,
b) 5 bis 50 Gew.-% mindestens eines Olefins mit 2 bis 6 Kohlenstoffatomen als Komponente B,
(c) 5 bis 50 Gew.-% mindestens eines hydrophoben Comonomeren aus der Gruppe der langkettigen Olefine, Ester von langkettigen Alkoholen mit Acrylsäure oder Methacrylsäure, Amide von langkettigen Amiden mit Acrylsäure oder Methacrylsäure und der langkettigen Alkylvinylether als Komponente C,
(d) 1 bis 40 Gew.-% mindestens eines Comonomers aus der Gruppe Acrylsäure, Methacrylsäure, Methylmethacrylat, N,N-Dimethylaminoethylacrylat und Styrol als Komponente D,
wobei die Summe der Mengen der Komponenten A, B, C und gegebenenfalls D 100 Gew.-% ergibt, und gegebenenfalls anschließender zumindest partieller Veresterung oder Hydrolyse und zumindest partieller Neutralisation und/oder Umsetzung der bei der Hydrolyse entstehenden Carboxylgruppen mit Basen.

In diesen Copolymerisaten wird vorzugsweise als Komponente A mindestens ein Comonomer aus der Gruppe Maleinsäureanhydrid, Itaconsäureanhydrid und Citraconsäureanhydrid, vorzugsweise Maleinsäureanhydrid und/oder als Komponente B mindestens ein Comonomer aus der Gruppe Ethen, Propen, 1-Buten, Isobuten, 1-Hexen, Cyclopenten, Cyclohexen und/oder als Komponente C mindestens ein Comonomer aus aliphatischen Olefinen mit mindestens 10 C-Atomen bei der Copolymerisation eingesetzt.

### Herstellung der Copolymerisate

Die Herstellung der Copolymerisate erfolgt vorzugsweise durch Umsetzung der vorstehend angegebenen Monomere durch radikalische Copolymerisation und vorzugsweise anschließende zumindest partielle Hydrolyse und Neutralisation der bei der Hydrolyse entstehenden Carboxylgruppen mit Basen. Die Hydrolyse und Neutralisation wird vorzugsweise im wesentlichen vollständig, insbesondere vollständig durchgeführt.

Die Copolymerisate können nach allen bekannten üblichen Polymerisationsverfahren hergestellt werden, z.B. durch Substanz-, Emulsions-, Suspensions-, Fällungs- und Lösungspolymerisation. Bei allen genannten Polymerisationsverfahren wird unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter. Bevorzugt wird nach der Methode der Lösungs-, Fällungs-, Suspensions- oder Substanzpolymerisation gearbeitet. Diese Polymerisationen können bei Temperaturen von 50 bis 300, vorzugsweise von 80 bis 200°C durchgeführt werden. Je nach Wahl der Polymerisationsbedingungen lassen sich mittlere Molekulargewichte von 800 bis 1.000.000 einstellen. Bevorzugt sind gewichtsmittlere Molekulargewichte im Bereich von 1000 bis 150.000. Besonders bevorzugt sind gewichtsmittlere Molekulargewichte im Bereich 1000 bis 30000.

Die Copolymerisation wird vorzugsweise in Gegenwart von Radikale bildenden Verbindungen durchgeführt. Man benötigt von diesen Verbindungen bis zu 15, vorzugsweise 0,2 bis 8 Gew.-%, bezogen auf die Menge der bei der Copolymerisation eingesetzten Monomeren. Geeignete Polymerisationinitiatoren sind beispielsweise Peroxidverbindungen, wie tert.-Butylperpivalat, tert.-Butylperneodecanoat, tert.-Butylper-2-ethyl-hexanoat, tert.-Butylperisobutyrat, Di-tert.-butylperoxid, Di-tert. -amylperoxid, Diacetylperoxidicarbonat, Dicyclohexylperoxidicarbonat oder Azoverbindungen, wie 2,2'-Azobisisobutyronitril. Die Initiatoren können allein oder in Mischung untereinander angewendet werden.

Bei der Copolymerisation können auch Redox-Coinitiatoren mitverwendet werden, z.B. Benzoin, Dimethylanilin oder Ascorbinsäure, sowie organisch lösliche Komplexe von Schwermetallen, wie Kupfer, Cobalt, Eisen, Mangan, Nickel und Chrom. Wegen der katalytischen Beschleunigung des Peroxid-Zerfalls kann bei Mitverwendung von Redox-Coinitiatoren die Polymerisation bei tieferen Temperaturen durchgeführt werden. Die üblicherweise verwendeten Mengen an Redox-Coinitiatoren betragen etwa 0.1 bis 1000 ppm, bezogen auf die eingesetzten Mengen an Monomeren. Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie C₁- bis C₄-Aldehyde, Ameisensäure und organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan. Die Polymerisationsregler werden im allgemeinen in Mengen von 0.1 bis 10 Gew.-%, bezogen auf die Monomere, eingesetzt. Auch durch die Wahl des geeigneten Lösungsmittels kann auf das mittlere Molekulargewicht Einfluß genommen werden. So führt die Polymerisation in Gegenwart von Verdünnungsmitteln mit benzylischen H-Atomen zu einer Verringerung des mittleren Molekulargewichtes durch Kettenübertragung.

Um höhermolekulare Copolymerisate herzustellen, ist es oft zweckmäßig, bei der Polymerisation in Gegenwart von Kettenverlängerern zu arbeiten. Solche Kettenverlängerer sind Verbindungen mit zwei- oder mehrfach ethylenisch ungesättigten Gruppen, wie Divinylbenzol, Pentaerythrittriallylether, Ester von Glykolen, wie Glykoldiacrylat, Glycerintriacrylat und Polyethylenglykoldiacrylate. Sie können bei der Polymerisation in Mengen bis zu 5 Gew.-% zugesetzt werden.

Bei der Fällungs- und Suspensionspolymerisation kann die Verwendung von Emulgatoren oder Schutzkolloiden zur Stabilisierung der Tröpfchen bzw. Teilchen von Vorteil sein. Als Emulgatoren können beispielsweise eingesetzt werden: Alkylphenolethoxylate, Primärakoholethoxylate, lineare Alkylbenzolsulfonate, Alkylsulfate, EO/PO-Blockcopolymere, Alkylpolyglucoside, N-(C₉-C₂₀-Acyl)aminosäuren, wie N-Oleylsarcosin oder N-Stearylsarcosin, oder auch Sulfobernsteinsäuremonoester und -monoamide.

Als Schutzkolloide können beispielsweise verwendet werden: Cellulosederivate, Polyethylenglykol, Polypropylenglykol, Copolymerisate aus Ethylenoxid und Propylenoxid, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE-C-25 01 123 beschrieben sind. Die Emulgatoren oder Schutzkolloide werden üblicherweise in Konzentrationen von 0.05 bis 15 % bezogen auf die Monomere, eingesetzt.

Zur Herstellung der beschriebenen Polymerisate nach der Lösungs-, Fällungs- oder Suspensionspolymerisation können als Lösungs- bzw. Verdünnungsmittel beispielsweise Toluol, o-Xylol, p-Xylol, Ethylbenzol, technische Mischungen von Alkylaromaten, Cyclohexan, technische Aliphatenmischungen, Aceton, Cyclohexanon, Tetrahydrofuran, Dioxan, Glykole und Glykolderivate, Polyalkylenglykole und deren Derivate, Diethylether, tert.-Butylmethylether, Essigsäuremethylester bzw. Mischungen verschiedener Lösungsmittel eingesetzt werden.

Die Copolymerisation kann kontinuierlich oder diskontinuierlich durchgeführt werden. Die Durchführung der Polymerisation kann nach einer Vielzahl von Varianten geschehen. Üblicherweise legt man einen Teil der Monomeren gegebenenfalls in einem geeigneten Verdünnungsmittel und gegebenenfalls in Anwesenheit eines Emulgators, eines Schutzkolloids oder weiterer Hilfsstoffe vor, inertisiert und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen, als für den Monomerzulauf.

Wird das Polymerisat in einer Lösungpolymerisation gewonnen, so kann das Polymerisat durch Verdampfen des Lösungsmittels, z.B. in einem Sprühtrockner, isoliert werden. Ist das verwendete Lösungsmittel wasserdampfflüchtig, so kann das Verdünnungsmittel durch Einleiten von Wasserdampf abgetrennt werden. Geht das Polymerisat aus einer Fällungs- oder Suspensionspolymerisation hervor, so kann das Verdünnungsmittel z.B. in einem Schaufeltrockner abgetrennt werden. Ist das verwendete Verdünnungsmittel wasserdampfflüchtig, so kann das Verdünnungsmittel durch Einleiten von Wasserdampf abgetrennt werden.

Um ein in einer Massepolymerisation hergestelltes Produkt in eine wäßrige Lösung oder Dispersion zu überführen, kann man beispielsweise nach Ende der Polymerisation Wasser zum Polymerisat zugeben, und die Mischung bei einer geeigneten Temperatur lösen oder dispergieren.

Vorzugsweise wird das Copolymerisat als Lösung oder kolloidale Lösung eingesetzt.

Durch die vorzugsweise erfolgende Behandlung des anhydridgruppenhaltigen Polymerisats mit Wasser werden die Anhydridgruppen zu Carboxylgruppen hydrolysiert. Anschließend werden die Carboxylgruppen zumindest teilweise, vorzugsweise vollständig, mit Basen neutralisiert. Hydrolyse und Neutralisation können jedoch auch gleichzeitig durch Zugabe verdünnter wäßriger Basen zum Copolymerisat vorgenommen werden. Als Basen zur Neutralisation der Carboxylgruppen werden beispielsweise Natronlauge, Kalilauge, Magnesiumhydroxid, Calciumhydroxid, Natriumcarbonat, Kaliumcarbonat, Ammoniak und primäre, sekundäre oder tertiäre Amine eingesetzt. Vorzugsweise erfolgt die Neutralisation durch Zugabe von wäßriger Natronlauge zum Copolymerisat. Die Neutralisation der Anhydridgruppen enthaltenden Copolymerisate wird mindestens bis zu einem solchen Grad durchgeführt, daß man in Wasser dispergierbare Copolymerisate erhält. Dieser Neutralisationsgrad liegt bei mindestens 10 % der insgesamt aus den Anhydridgruppen entstehenden Carboxylgruppen. Die Mengen an Wasser und an Neutralisationsmittel werden dabei so gewählt, daß 10 bis 80, vorzugsweise 20 bis 60 Gew.-% Feststoffe enthaltende Dispersionen oder Lösungen entstehen, die in den Handel gebracht werden.

Die erhaltenen anydridgruppenhaltigen Copolymerisate können durch Umsetzung mit hydroxygruppenfunktionalisierten Verbindungen partiell verestert werden. Die Veresterung erfolgt vorzugsweise unter Ausschluß von Wasser. Geeignete Alkohole können 1 bis 40, vorzugsweise 3 bis 30 C-Atome enthalten. Es können primäre, sekundäre und tertiäre Alkohole Verwendung finden.

Man kann sowohl gesättigte aliphatische Alkohole als auch ungesättigte Alkohole, wie Oleylalkohol einsetzen. Vorzugsweise werden einwertige, primäre oder sekundäre Alkohole verwendet, z.B. Methanol, Ethanol, n-Propanol, Isopropanol, n-Butanol, Isobutanol, N-Pentanol und Isomere, n-Hexanol und Isomere, n-Octanol und Isomere, wie z.B. 2-Ethylhexanol, Nonanole, Decanole, Dodecanole, Tridecanole, Cyclohexanol, Talgfettalkohol, Stearylalkohol sowie die technisch durch Oxosynthese leicht zugänglichen Alkohole bzw. Alkoholgemische mit 9 bis 19 C-Atomen, wie C_{9/11}-Oxoalkohol und C_{13/15}-Oxoalkohol. Es können auch Alkoxylierungsprodukte von C₁-C₄₀-Alkoholen verwendet werden.

Vorzugsweise verwendet man Alkohole mit 4 bis 24 C-Atomen, wie n-Butanol, Isobutanol, Amylalkohol, 2-Ethylhexanol, Tridecanol, Talgfettalkohol, Stearylalkohol, C_{9/11}-Oxoalkohol und C_{13/15}-Oxoalkohol. Nach der partiellen Umwandlung der Anhydridgruppen in Halbester-Gruppen erfolgt die Hydrolyse von weiteren der noch vorhandenen Anydridgruppen des Polymerisats. Die Hydrolyse von weiteren der noch vorhandenen Anhydridgruppen des Copolymerisats kann auch gleichzeitig mit einer partiellen Neutralisation vorgenommen werden, indem man eine wäßrige Base zu dem partiell veresterten und noch Anhydridgruppen enthaltenden Copolymerisat zusetzt. Zur Beschleunigung der Hydrolyse der Anhydridgruppen kann gegebenenfalls auch ein geeigneter Katalysator zugesetzt werden, beispielsweise ein Pyridinderivat, wie 4-Dimethylaminopyridin. Andererseits kann auch ein gewisser Anteil an nichthydrolysierten Dicarbonsäureanhydridgruppen in der wäßrigen Formulierung verbleiben.

Die Copolymerisate können auch durch Zugabe von primären und/oder sekundären Aminen solvolysiert werden. Die Solvolyse wird dabei mit solchen Mengen an Aminen durchgeführt, daß ein Teil, vorzugsweise 10 bis 50 % der aus den einpolymerisierten Dicarbonsäureanhydridanteilen insgesamt entstehenden Carboxylgruppen amidiert sind. Nach der Bildung von Halbamidgruppen im Copolymerisat erfolgt die Neutralisation. Sie wird so weit geführt, daß mindestens 10 % der verbliebenen Carboxylgruppen neutralisiert werden. Geeignete Amine sind beispielsweise Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Octylamin, Isotridecylamin, Talgfettamin, Stearylamin, Oleylamin, Dimethylamin, Diethylamin, Di-n-Propylamin, Di-Isopropylamin, Di-n-Butylamin, Di-Isobutylamin, Dihexylamin, Dicyclohexylamin, Di-Methylcyclohexylamin, Di-2-Ethylhexylamin, Di-n-Octylamin, Di-Isotridecylamin, Di-Talgfettamin, Di-Stearylamin, Di-Oleylamin, Ethanolamin, Di-Ethanolamin, Triethanolamin, n-Propanolamin, Di-n-Propanolamin und Morpholin.

Durch Wahl geeigneter Reaktionsbedingungen lassen sich mit Ammoniak oder primären Aminen aus den Dicarbonsäureanhydrideinheiten des Copolymerisats Imidstrukturen erzeugen. Diese imidfunktionalisierten Copolymerisate lassen sich analog zu den veresterten oder amidisierten Copolymerisaten in eine wäßrige Dispersion oder Lösung überführen.

Ferner können die oben beschriebenen Anhydridgruppen enthaltenden Copolymerisate auch mit Aminocarbonsäuren, die eine primäre oder sekundäre Aminogruppe aufweisen, umgesetzt werden. Bei den Aminocarbonsäuren kommen sämtliche Aminosäuren oder Mischungen von Aminosäuren in Betracht, die eine primäre oder sekundäre Aminogruppe enthalten, wie Glycin, Alanin, β-Alanin, Valin, Leucin, Methionin, Cystein, Aminocapronsäure, Caprolactam, Asparagin, Isoasparagin, Glutamin, Isoglutamin, Aminodicarbonsäuren wie Asparaginsäure, Glutaminsäure und Casein, N-Methylaminosäuren wie N-Methylglycin (Sarkosin), sowie Hydroxyprolin, Serin, Threonin, Prolin, Iminodiessigsäure, sowie basische Diaminocarbonsäuren wie Lysin, Lysinhydrochlorid, Arginin, Histidin und α-Aminocaprolactam. Besonders bevorzugt sind Sarkosin und Asparaginsäure.

Die Solvolyse der oben beschriebenen Anhydridgruppen enthaltenden Copolymerisate mit Aminocarbonsäuren, die eine primäre oder sekundäre Aminogruppe aufweisen, wird bevorzugt im wäßrigen Medium durchgeführt. Hierbei ist es vorteilhaft, die Aminocarbonsäuren, die eine primäre oder sekundäre Aminogruppe aufweisen, in Form ihrer Alkali-, Erdalkali- oder Ammoniumsalze einzusetzen. Die Solvolyse wird dabei mit solchen Mengen an Aminocarboxylaten durchgeführt, daß 5 bis 60 % der aus den einpolymerisierten Dicarbonsäureanhydrideinheiten insgesamt entstehenden Carboxylgruppen amidiert werden. Anschließend erfolgt eine Neutralisation, bei der bevorzugt mindestens 10 % der insgesamt aus dem Anhydridgruppen enthaltenden Copolymerisat entstehenden Carboxylgruppen neutralisiert sind.

Die so erhältlichen wäßrigen Lösungen oder Dispersionen des Copolymerisats sind beständig und lagerstabil. Sie eignen sich in hervorragender Weise zu Veredlung von Leder und Pelzfellen, weil sie neben einer besonders ausgeprägten nachgerbenden, fettenden und hydrophobierenden Wirkung auch besonders gute Penetrationseigenschaften aufweisen. Neben den füllenden Eigenschaften führen die fettenden und hydrophoben Eigenschaften zu einer unterstützenden Wirkung der Fettungs- bzw. Hydrophobiermittel, so daß diese in der Einsatzmenge reduziert werden können. Dabei können auch Mischungen der beschriebenen wäßrigen Copolymerisatlösungen und Dispersionen mit bekannten Hydrophobier-, Fettungs- und Nachgerbstoffen eingesetzt werden. So läßt sich beispielsweise das Penetrationsverhalten eines auf Paraffin basierenden Hydrophobiermittels durch eine Vorbehandlung des Leders mit den erfindungsgemäßen Copolymerisatlösungen oder Dispersionen deutlich verbessern. Das mit dieser Kombination aus den erfindungsgemäßen Copolymerisatlösungen und Dispersionen und bekannten Hydrophobiermitteln behandelte Leder- und Pelzmaterial zeigt eine nur noch geringe Wasseraufnahmebereitschaft und Wasserdurchlässigkeit, aber ausgezeichnete Wasserdampfdurchlässigkeiten (Tragekomfort).

Den erfindungsgemäß verwendeten Lösungen oder Dispersionen können Fettungs- bzw. Hydrophobiermittel in Anteilen bis zu 40 Gew.-%, bezogen auf die Menge an Copolymerisat, zugemischt werden, um ein Lederfettungsmittel mit verbesserten Penetrationseigenschaften herzustellen. Diese emulgatorhaltigen wäßrigen Dispersionen oder Lösungen weisen hervorragende fettende und füllende Wirkung auf, bei gleichzeitig sehr guten Penetrationseigenschaften. Als Emulgatoren können die üblichen nichtionischen oder auch anionischen Emulgatoren, wie alkoxylierte Fettalkohole oder Oxoalkohole, Blockcopolymere aus Ethylenoxy- und Propylenoxy-Einheiten, alkoxylierte Fettsäuren, ethoxilierte Fettsäureamide, Fettsäurealkanolamide, Fettsäure-Ammoniumsalze, Fettalkoholphosphate, Alkylglukoside, Alkylphenolalkoxylate, 2-Sulfobernsteinsäuremono- oder -diester oder N-Acylaminosäuren oder Mischungen davon verwendet werden.

Von besonderer Bedeutung sind Mischungen aus vorstehend beschriebenen Copolymerisaten und synthetischen aromatischen Gerbstoffen (sogenannte Syntane), sowie deren Vorprodukte, bzw. die Alkalimetall- und Ammoniumsalze dieser Verbindungen. Als Vorprodukte sind z.B. zu nennen: Naphthalin, Diphenyl, Terphenyl, Phenole, Kresole, 4,4'-Dihydroxidiphenylsulfon, β-Naphthol, Dihydroxibenzole, Resorcin, 2,2'-Bis(hydroxiphenyl)-propan, Dophenylether, Ditolylether. Diese Vorprodukte werden in dem Fachmann bekannter Weise mit Sulfonierungsmitteln, wie Oleum oder Schwefelsäure, zu den nicht kondensierten, anionischen Vorprodukten umgesetzt.

Die unterschiedlichen Möglichkeiten zur Herstellung von anionischen, aromatischen, synthetischen Gerbstoffen durch Kondensation der obigen Vorprodukte mit geeigneten Kondensationsmitteln, wie Formaldehyd oder Glyoxal, und möglichen Coprodukten, wie Harnstoff, Melamin, Dicyandiamid, Sulfonamide, Ligninsulfonate, sind dem Fachmann bekannt und ausführlich in der Literatur beschrieben (siehe z.B. Ullmanns Enzyklopädie der technischen Chemie, Bd. 16 (4), S. 111-117 (1979).

Die erfindungsgemäßen Lederbehandlungsmittel aus Kombination von vorstehend beschriebenen Copolymerisaten und synthetischen aromatischen Gerbstoffen bzw. seinen Vorprodukten enthalten, bezogen auf den Feststoff-Gehalt, 1 bis 80 % Copolymerisat und 20 bis 99% synthetischen aromatischen Gerbstoff, bevorzugt 5 bis 50 % Copolymerisat und 50 bis 95 % synthetischen aromatischen Gerbstoff. Das Copolymer kann dabei, wie vorstehend beschrieben, aus Komponenten A, B und C oder A, B, C und D aufgebaut sein.

Bevorzugt werden wäßrige Dispersionen oder Lösungen eingesetzt, bei denen sich mindestens 50 Gew.-% des Copolymerisates in Lösung befinden, wobei auch kolloidale Lösungen gemeint sind. In einer besonders bevorzugten Ausführungsform werden die Copolymerisate bzw. deren Umsetzungsprodukte in Form ihrer klaren, wäßrigen Lösungen eingesetzt, wobei auch kolloidale Lösungen gemeint sind.

Bevorzugt werden wäßrige Dispersionen oder Lösungen von solchen Copolymerisaten bzw. derer Umsetzungsprodukte eingesetzt, die aus einem Gewichtsüberschuß an wasserlöslichen Monomeren und aus einem Gewichtsunterschuß an wasserunlöslichen Monomeren aufgebaut sind.

Die erfindungsgemäßen Dispersionen oder Lösungen können weiterhin auch Schutzkolloide in Anteilen bis zu 40 Gew.-%, bezogen auf die Menge an Copolymerisat, enthalten. Diese schutzkolloidhaltigen wäßrigen Dispersionen oder Lösungen weisen ebenfalls hervorragende fettende und füllende Wirkung auf, bei gleichzeitig sehr guten Penetrationseigenschaften. Als Schutzkolloide werden beispielsweise Polyvinylalkohol, abgebaute Stärke, modifizierte Stärken, Carboxymethylcellulose, Hydroxyethylcellulose und Polyvinylpyrrolidon eingesetzt.

Die Erfindung betrifft auch ein Verfahren zum Hydrophobieren von Ledermaterial, insbesondere Leder oder Pelzfellen, bei dem das Ledermaterial in einem ersten Schritt mit einer wäßrigen Lösung oder Dispersion eines Copolymerisats, wie es vorstehend beschrieben ist, oder eines Lederbehandlungsmittels, wie es vorstehend beschrieben ist, behandelt wird, und das Ledermaterial danach in einem zweiten Schritt zur Desaktivierung des Hydrophilie des Copolymerisats, insbesondere mit Chromsalzen, behandelt wird.

Die Erfindung wird nachstehend durch Beispiele näher erläutert.

### Beispiele

Wenn nicht anders angegeben, beziehen sich die Prozent-Angaben auf das Gewicht. Die Bestimmung des gewichtsmittleren Molekulargewichtes erfolgte durch Gelpermeationschromatographie bei 23°C. Als Elutionsmittel wurde eine wäßrige Tris(hydroxymethyl)-aminomethan (TRIS)-Pufferlösung (0.08 molar) eingesetzt. Die Chromatographiesäulen waren mit TSK PW-XL 3000 und TSK PW-XL 5000 (TosoHaas) als stationärer Phase beladen. Zur Detektion wurde ein Differentialrefraktometer eingesetzt. Die Kalibrierung erfolgte mit einer wäßrigen Polyacrylsäure-Na-Salzlösung nach dem Kalibrierverfahren von M.J.R. Cantow et al. (J. Polym. Sci., A-1, 5, 1391-1394 (1967)).

### Beispiel 1

In einem Druckreaktor von 2 1 Inhalt mit Dosier- und Destillationseinrichtungen wurden Verdünnungsmittel (V) o-Xylol (750 ml) und 25 % der Gesamtmenge von Monomer (a) MSA (24,5 g) vorgelegt und aufeinanderfolgend 3 mal mit 3 bar Stickstoff abgepreßt und wieder entspannt. Anschließend wurde durch Evakuieren ein Unterdruck von 91 mbar eingestellt und auf die Reaktionstemperatur (T) 120°C erhitzt. Nach Erreichen der 120°C wurden unter Aufrechterhalten dieser Temperatur gleichbeginnend zudosiert: Monomer (a) Maleinsäureanhydrid (73,5 g) innerhalb von ta = 3 Std., Monomer (b) Isobuten (45 g) innerhalb von tb = 4 Std., Monomer (c) C₂₀₋₂₄-Olefin (29.6 g) innerhalb von tc = 2 Std., Monomer (d) Acrylsäure (7.2 g) innerhalb von td = 3 Std., Initiator (i) Lösung von 5.4 g tert.-Butylperethylhexanoat in 100 g Xylol innerhalb von ti = 5 Std. Nach beendeter Zugabe wurde das Reaktionsgemisch noch 2 Std. bei 120°C unter Rühren nachpolymerisiert. Danach wurde auf Normaldruck entspannt, auf 90°C abgekühlt und mit 100 g Wasser verdünnt. Dann wurde durch Einleiten von Wasserdampf das Xylol als Azeotrop mit Wasser abdestilliert. Nach Erreichen einer Innentemperatur von 100°C wurde der Dampf abgestellt und das Gemisch mit Natronlauge (50 Gew.-%) bis zu einem pH-Wert von 7.5 neutralisiert. Nach dem Abkühlen lag eine klare Lösung mit einem Feststoffgehalt (FG) von 44,5 Gew.-% vor. Das gewichtsmittlere Molekulargewicht (MW) des gelösten polymeren Salzes betrug 4.500 g/mol.

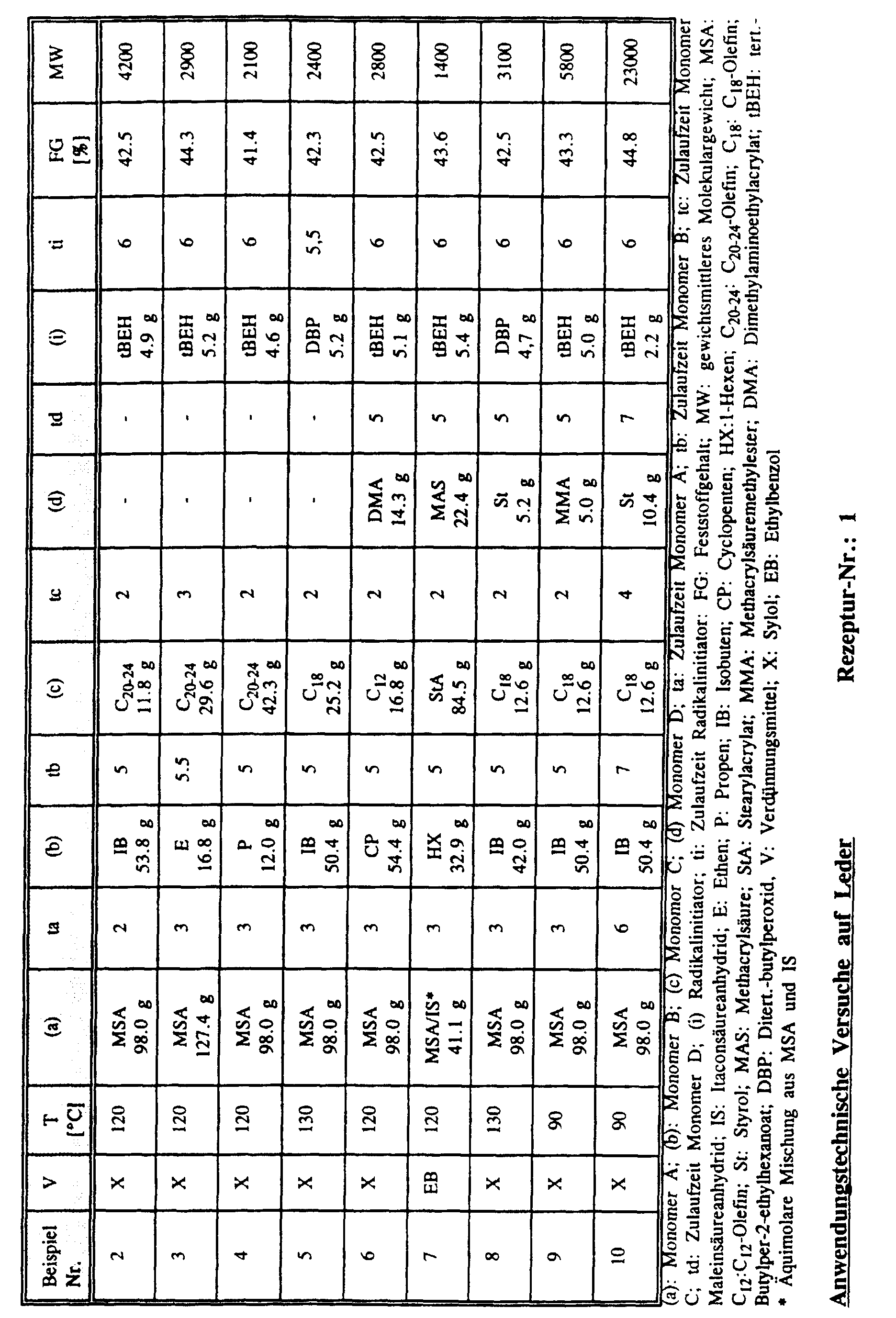

| | | | |
|---|---|---|---|
| Ausgangsmaterial: Chromgegerbtes Rind-wet-blue | | | |
| Falzstärke: 1,8 mm | | | |
| Prozentangaben beziehen sich auf: Falzgewicht | | | |
| Waschen | 200 % | Wasser 35°C | 10 min Flotte ablassen |
| Neutralisation | 75 % | Wasser 35°C | |
| | 1,5 % | Natriumformiat | |
| | 1,0 % | Natriumbicarbonat | 120 min |
| | | pH-Flotte: 5,0 Schnitt (BKG): | gleichmäßig Flotte ablassen |
| Waschen | 200 % | Wasser 35°C | 10 min Flotte ablassen |
| Nachgerbung | 100 % | Wasser 50°C | |
| | x % | Dispersion der Erfindung | 40 min |
| | + 4 % | Kastanie | 30 min |
| | 0,2 % | Ammoniak 25%ig | 5 min |
| Färbung | + 2 % | Luganil® Braun NGB | 30 min |
| Hydrophobierung | + y % | Hydrophobiermittel | 80 min |
| Absäuern | + 1,5 % | Ameisensäure 85%ig | 2 x 10 min + 20 min |
| | | pH(Flotte) = 3,5 | Flotte ablassen |
| Waschen | 200 % | Wasser 35°C | 10 min Flotte ablassen |
| Fixierung | 100 % | Wasser 30C | |
| | 3 % | Chromitan® FM | 120 min Flotte ablassen |
| Waschen | 2 x 200 % | Wasser 25°C | 10 min Flotte ablassen |

Leder über Nacht auf Bock ausrecken, vakuumieren 2 min/80°C, hängetrocknen, konditionieren, stollen, kiss-plate

| | | | |
|---|---|---|---|
| **Anwendungstechnische Versuche auf Leder Rezeptur-Nr.: 2** | | | |
| Ausgangsmaterial: Chromgegerbtes Rind-wet-blue | | | |
| Falzstärke: 1,8 mm | | | |
| Prozentangaben beziehen sich auf: Falzgewicht | | | |
| Waschen | 200 % | Wasser 35°C | 10 min Flotte ablassen |
| Neutralisation | 75 % | Wasser 35°C | |
| | 1,5 % | Natriumformiat | |
| | 0,5 % | Natriumbicarbonat | 30 min |
| | + x % | Dispersion der Erfindung | 90 min |
| | | pH-Flotte: 5,0 | |
| | | Schnitt (BKG): gleichmäßig | Flotte ablassen |
| Waschen | 200 % | Wasser 35°C | 10 min Flotte ablassen |
| Nachgerbung | 100 % | Wasser 40°C | |
| | + 4 % | Kastanie | 30 min |
| | 0,2 % | Ammoniak 25%ig | 5 min |
| Färbung | + 2 % | Luganil® Braun NGB | 30 min |
| Hydrophobierung | + y % | Hydrophobiermittel | 80 min |
| Absäuern | + 1,5 % | Ameisensäure 85%ig | 2 x 10 min + 20min |
| | | pH(Flotte) = 3,5 | Flotte ablassen |
| Waschen | 200 % | Wasser 35°C | 10 min Flotte ablassen |
| Fixierung | 100 % | Wasser 30°C | |
| | 3 % | Chromitan® FM | 120 min Flotte ablassen |
| Waschen | 2 x 200 % | Wasser 25°C | 10 min Flotte ablassen |

Leder über Nacht auf Bock ausrecken, vakuumieren 2 min/80°C, hängetrocknen, konditionieren, stollen, kiss-plate Anwendungstechnische Versuche

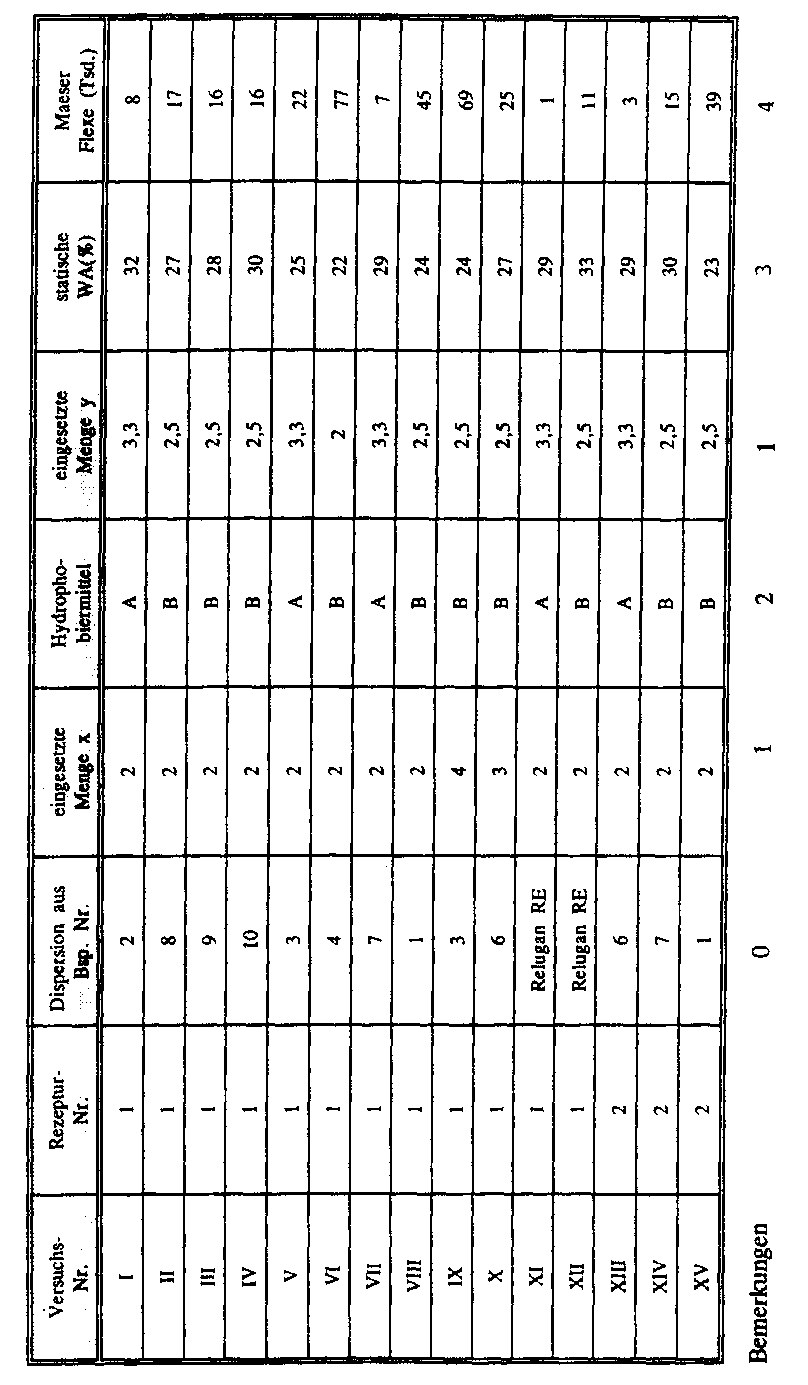

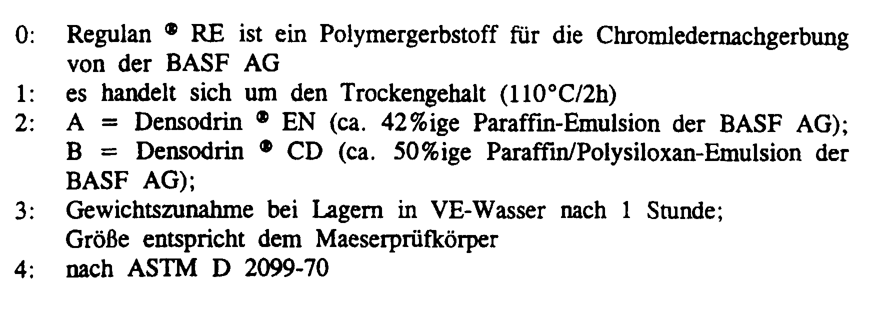

Die Leder I bis III, V bis IX und XV sind weich und angenehm im Griff, egal und sehr gut durchgefärbt.

Die Leder IV und X bis XIII sind recht standig, weisen einen runden, angenehmen Griff auf und sind ebenfalls egal und gut durchgefärbt.

Die Leder XI und XIII haben außerdem einen leicht wachsigen Griff.

## Patentansprüche

1. Verwendung von wäßrigen Lösungen oder Dispersionen von Copolymerisaten, die durch radikalische Copolymerisation von
(a) 20 bis 90 Gew.-% mindestens einer monoethylenisch ungesättigten C₄- bis C₆-Dicarbonsäure oder deren Anhydrids als Komponente A,
(b) 5 bis 50 Gew.-% mindestens eines Olefins mit 2 bis 6 Kohlenstoffatomen als Komponente B,
(c) 5 bis 50 Gew.-% mindestens eines hydrophoben Comonomeren aus der Gruppe der langkettigen Olefine mit mindestens 10 Kohlenstoffatomen, Ester von langkettigen Alkoholen mit mindestens 8 Kohlenstoffatomen mit Acrylsäure oder Methacrylsäure, Amide von langkettigen Amiden mit mindestens 8 Kohlenstoffatomen mit Acrylsäure oder Methacrylsäure und der langkettigen Alkylvinylether mit mindestens 8 Kohlenstoffatomen als Komponente C,
(d) 0 bis 40 Gew.-% weiteren mit obigen Monomeren copolymerisierbaren Comonomeren als Komponente D,
wobei die Summe der Mengen der Komponenten A, B, C und gegebenenfalls D 100 Gew.-% ergibt,
und anschließender zumindest partieller Veresterung oder Hydrolyse und Neutralisation und/oder Umsetzung der bei der Hydrolyse entstehenden Carboxylgruppen mit Basen erhältlich sind, zum Behandeln von Leder und/oder Pelzfellen.

2. Verwendung nach Anspruch 1, dadurch gekennzeichnet, daß
als Komponente A mindestens ein Comonomer aus der Gruppe Maleinsäureanhydrid, Itaconsäureanhydrid und Citraconsäureanhydrid, vorzugsweise Maleinsäureanhydrid und/oder
als Komponente B mindestens ein Comonomer aus der Gruppe Ethen, Propen, 1-Buten, Isobuten, 1-Hexen, Cyclopenten, Cyclohexen und/oder
als Komponente C mindestens ein Comonomer aus aliphatischen Olefinen mit mindestens 10 C-Atomen und/oder
als Komponente D mindestens ein Comonomer aus der Gruppe Acrylsäure, Methacrylsäure, Methylvinylether, Ethylvinylether, 2-Acrylamido-2-methylpropansulfonsäure, Methyl(meth)acrylat, Ethyl(meth)acrylat, Butyl(meth)acrylat, Hydroxyethyl(meth)acrylat, Hydroxypropyl(meth)acrylat, 2-(N,N-Dimethylamino)ethyl(meth)acrylat, 3-(N,N-Dimethylamino)propyl(meth)acrylat, 3-Dimethylaminopropyl(meth)acrylamid, Vinylacetat, Vinylpropionat N-Vinylformamid, Styrol, α-Methylstyrol, N-Vinylpyrrolidon, N-Vinylimidazol, Acrylnitril, Acrolein und Methacrolein bei der Copolymerisation eingesetzt wird.

3. Verwendung nach Anspruch 1 oder 2, dadurch gekennzeichnet, daß die Copolymerisate als Mittel zum Nachgerben, Fetten oder Hydrophobieren von Leder und/oder Pelzfellen, insbesondere zum Hydrophobieren eingesetzt werden.

4. Lederbehandlungsmittel, enthaltend ein Gemisch aus
1 bis 80 Gew.-% eines Copolymerisats, wie es in einem der Ansprüche 1 bis 3 definiert ist, und
20 bis 99 Gew.-% mindestens eines synthetischen aromatischen Gerbstoffs (Syntans).

5. Verfahren zum Hydrophobieren von Ledermaterial, insbesondere Leder oder Pelzfellen, dadurch gekennzeichnet, daß
das Ledermaterial in einem ersten Schritt mit einer wäßrigen Lösung oder Dispersion, wie sie in einem der Ansprüche 1 bis 3 definiert ist, oder einem Lederbehandlungsmittel, wie es in Anspruch 4 definiert ist, behandelt wird, und
das Ledermaterial danach in einem zweiten Schritt zur Desaktivierung der Hydrophilie des Copolymerisats, insbesondere mit Chromsalzen, behandelt wird.

6. Copolymerisat, erhältlich durch radikalische Copolymerisation von
(a) 20 bis 89 Gew.-% mindestens einer monoethylenisch ungesättigten C₄₋₆-Dicarbonsäure oder deren Anhydrids als Komponente A,
(b) 5 bis 50 Gew.-% mindestens eines Olefins mit 2 bis 6 Kohlenstoffatomen als Komponente B,
(c) 5 bis 50 Gew.-% mindestens eines hydrophoben Comonomeren aus der Gruppe der langkettigen Olefine mit mindestens 10 Kohlenstoffatomen, Ester von langkettigen Alkoholen mit mindestens 8 Kohlenstoffatomen mit Acrylsäure oder Methacrylsäure, Amide von langkettigen Amiden mit mindestens 8 Kohlenstoffatomen mit Acrylsäure oder Methacrylsäure und der langkettigen Alkylvinylether mit mindestens 8 Kohlenstoffatomen als Komponente C,
(d) 1 bis 15 Gew.-% weiteren mit obigen Monomeren copolymerisierbaren Comonomeren als Komponente D,
wobei die Summe der Mengen der Komponenten A, B, C und D 100 Gew.-% ergibt, und gegebenenfalls anschließender zumindest partieller Veresterung oder Hydrolyse und Neutralisation und/oder Umsetzung der bei der Hydrolyse entstehenden Carboxylgruppen mit Basen.

7. Copolymerisat nach Anspruch 6, dadurch gekennzeichnet, daß
als Komponente A mindestens ein Comonomer aus der Gruppe Maleinsäureanhydrid, Itaconsäureanhydrid und Citraconsäureanhydrid, vorzugsweise Maleinsäureanhydrid und/cder
als Komponente B mindestens ein Comonomer aus der Gruppe Ethen, Propen, 1-Buten, Isobuten, 1-Hexen, Cyclopenten, Cyclohexen und/oder
als Komponente C mindestens ein Comonomer aus aliphatischen Olefinen mit mindestens 10 C-Atomen und/oder
als Komponente D mindestens ein Comonomer aus der Gruppe Acrylsäure, Methacrylsäure, Methylvinylehter, Ethylvinylether, 2-Acrylamido-2-methylpropansulfonsäure, Methyl(meth)acrylat, Ethyl(meth)acrylat, Butyl(meth)acrylat, Hydroxyethyl(meth)acrylat, Hydroxypropyl(meth)acrylat, 2-(N,N-Dimethyl-amino)ethyl(meth)acrylat, 3-(N,N-Dimethylamino)propyl(meth)acrylat, 3-Dimethylaminopropyl(meth)acrylamid, Vinylacetat, Vinylpropionat N-Vinylformamid, Styrol, α-Methylstyrol, N-Vinylpyrrolidon, N-Vinylimidazol, Acrylnitril, Acrolein und Methacrolein bei der Copolymerisation eingesetzt wird.

8. Copolymerisate, erhältlich durch radikalische Copolymerisation von
(a) 20 bis 89 Gew.-% mindestens einer monoethylenisch ungesättigten C₄- bis C₆-Dicarbonsäure oder deren Anhydrids als Komponente A,
b) 5 bis 50 Gew.-% mindestens eines Olefins mit 2 bis 6 Kohlenstoffatomen als Komponente B,
(c) 5 bis 50 Gew.-% mindestens eines hydrophoben Comonomeren aus der Gruppe der langkettigen Olefine mit mindestens 10 Kohlenstoffatomen, Ester von langkettigen Alkoholen mit mindestens 8 Kohlenstoffatomen mit Acrylsäure oder Methacrylsäure, Amide von langkettigen Amiden mit mindestens 8 Kohlenstoffatomen mit Acrylsäure oder Methacrylsäure und der langkettigen Alkylvinylether mit mindestens 8 Kohlenstoffatomen als Komponente C,
(d) 1 bis 40 Gew.-% mindestens eines Comonomers aus der Gruppe Acrylsäure, Methacrylsäure, Methylmethacrylat, N,N-Dimethylaminoethylacrylat und Styrol als Komponente D,
wobei die Summe der Mengen der Komponenten A, B, C und gegebenenfalls D 100 Gew.-% ergibt, und gegebenenfalls anschließender zumindest partieller Veresterung oder Hydrolyse und zumindest partieller Neutralisation und/oder Umsetzung der bei der Hydrolyse entstehenden Carboxylgruppen mit Basen.

9. Copolymerisat nach Anspruch 8, dadurch gekennzeichnet, daß
als Komponente A mindestens ein Comonomer aus der Gruppe Maleinsäureanhydrid, Itaconsäureanhydrid und Citraconsäureanhydrid, vorzugsweise Maleinsäureanhydrid und/oder
als Komponente B mindestens ein Comonomer aus der Gruppe Ethen, Propen, 1-Buten, Isobuten, 1-Hexen, Cyclopenten, Cyclohexen und/oder
als Komponente C mindestens ein Co-monomer aus aliphatischen Olefinen mit mindestens 10 C-Atomen bei der Copolymerisation eingesetzt wird.

10. Verfahren zur Herstellung von Copolymerisation nach einem der Ansprüche 6 bis 9 durch Umsetzung der angegebenen Monomere durch radikalische Copolymerisation und vorzugsweise anschließende zumindest partielle Hydrolyse und Neutralisation der bei der Hydrolyse entstehenden Carboxylgruppen mit Basen.

## Claims

1. The use of aqueous solutions or dispersions of copolymers obtainable by free-radical copolymerization of
(a) from 20 to 90% by weight of at least one monoethylenically unsaturated C₄₋₆-dicarboxylic acid or the anhydride thereof, as component A,
(b) from 5 to 50% by weight of at least one olefin having 2 to 6 carbon atoms, as component B,
(c) from 5 to 50% by weight of at least one hydrophobic comonomer from the group consisting of long-chain olefins having at least 10 carbon atoms, esters of long-chain alcohols having at least 8 carbon atoms with acrylic acid or methacrylic acid, long-chain amides having at least 8 carbon atoms with acrylic acid or methacrylic acid, and long-chain alkyl vinyl ethers having at least 8 carbon atoms, as component C,
(d) from 0 to 40% by weight of further comonomers which can be copolymerized with the above monomers, as component D,
where the sum of the amounts of components A, B, C and, if used, D is 100% by weight,
followed by at least partial esterification or hydrolysis and neutralization and/or reaction of the carboxyl groups formed during the hydrolysis with bases, for treating leather and/or fur skins.

2. The use as claimed in claim 1, wherein
component A is at least one comonomer from the group consisting of maleic anhydride, itaconic anhydride and citraconic anhydride, preferably maleic anhydride, and/or
component B is at least one comonomer from the group consisting of ethene, propene, 1-butene, isobutene, 1-hexene, cyclopentene and cyclohexene, and/or
component C is at least one comonomer from the group consisting of aliphatic olefins having at least 10 carbon atoms, and/or
component D is at least one comonomer from the group consisting of acrylic acid, methacrylic acid, methyl vinyl ether, ethyl vinyl ether, 2-acrylamido-2-methylpropanesulphonic acid, methyl (meth)acrylate, ethyl (meth)acrylate, butyl (meth)acrylate, hydroxyethyl (meth)acrylate, hydroxypropyl (meth)acrylate, 2-(N,N-dimethylamino)ethyl (meth)acrylate, 3-(N,N-dimethylamino)propyl (meth)acrylate, 3-dimethylaminopropyl(meth) acrylamide, vinyl acetate, vinyl propionate, N-vinylformamide, styrene, α-methylstyrene, N-vinylpyrrolidone, N-vinylimidazole, acrylonitrile, acrolein and methacrolein.

3. The use as claimed in claim 1 or 2, wherein the copolymers are used as agents for retanning, fat-liquoring or, in particular, hydrophobicizing leather and/or fur skins.

4. A leather treatment composition, comprising a mixture of
from 1 to 80% by weight of a copolymer as defined in one of claims 1 to 3, and
from 20 to 99% by weight of at least one synthetic aromatic tanning agent (syntan).

5. A process for hydrophobicizing leather material, in particular leather or fur skins, which comprises
treating the leather material, in a first step, with an aqueous solution or dispersion as defined in one of claims 1 to 3, or a leather treatment composition as defined in claim 4, and
then treating the leather material, in a second step, in particular with chromium salts in order to deactivate the hydrophilicity of the copolymer.

6. A copolymer obtainable by free-radical copolymerization of
(a) from 20 to 89% by weight of at least one monoethylenically unsaturated C₄₋₆-dicarboxylic acid or the anhydride thereof, as component A,
(b) from 5 to 50% by weight of at least one olefin having 2 to 6 carbon atoms, as component B,
(c) from 5 to 50% by weight of at least one hydrophobic comonomer from the group consisting of long-chain olefins having at least 10 carbon atoms, esters of long-chain alcohols having at least 8 carbon atoms with acrylic acid or methacrylic acid, long-chain amides having at least 8 carbon atoms of acrylic acid or methacrylic acid, and long-chain alkyl vinyl ethers having at least 8 carbon atoms, as component C,
(d) from 1 to 15% by weight of further comonomers which can be copolymerized with the above monomers, as component D,
where the sum of the amounts of components A, B, C and D is 100% by weight, followed, is desired, by at least partial esterification or hydrolysis and neutralization and/or reaction of the carboxyl groups formed during the hydrolysis with bases.

7. A copolymer as claimed in claim 6, wherein
component A is at least one comonomer from the group consisting of maleic anhydride, itaconic anhydride and citraconic anhydride, preferably maleic anhydride, and/or
component B is at least one comonomer from the group consisting of ethene, propene, 1-butene, isobutene, 1-hexene, cyclopentene and cyclohexene, and/or
component C is at least one comonomer from the group consisting of aliphatic olefins having at least 10 carbon atoms, and/or
component D is at least one comonomer from the group consisting of acrylic acid, methacrylic acid, methyl vinyl ether, ethyl vinyl ether, 2-acrylamido-2-methylpropanesulphonic acid, methyl (meth)acrylate, ethyl (meth)acrylate, butyl (meth)acrylate, hydroxyethyl (meth)acrylate, hydroxypropyl (meth)acrylate, 2-(N,N-dimethylamino)ethyl (meth)acrylate, 3-(N,N-dimethylamino)propyl (meth)acrylate, 3-dimethylaminopropyl(meth) acrylamide, vinyl acetate, vinyl propionate, N-vinylformamide, styrene, α-methylstyrene, N-vinylpyrrolidone, N-vinylimidazole, acrylonitrile, acrolein and methacrolein.

8. A copolymer obtainable by free-radical copolymerization of
(a) from 20 to 89% by weight of at least one monoethylenically unsaturated C₄₋₆-dicarboxylic acid or the anhydride thereof, as component A,
(b) from 5 to 50% by weight of at least one olefin having 2 to 6 carbon atoms, as component B,
(c) from 5 to 50% by weight of at least one hydrophobic comonomer from the group consisting of long-chain olefins having at least 10 carbon atoms, esters of long-chain alcohols having at least 8 carbon atoms with acrylic acid or methacrylic acid, long-chain amides having at least 8 carbon atoms with acrylic acid or methacrylic acid, and long-chain alkyl vinyl ethers having at least 8 carbon atoms, as component C,
(d) from 1 to 40% by weight of at least one comonomer from the group consisting of acrylic acid, methacrylic acid, methyl methacrylate, N,N-dimethylaminoethyl acrylate and styrene, as component D,
where the sum of the amounts of components A, B, C and, if used, D is 100% by weight, followed, if desired, by at least partial esterification or hydrolysis and at least partial neutralization and/or reaction of the carboxyl groups formed during the hydrolysis with bases.

9. A copolymer as claimed in claim 8, wherein
component A is at least one comonomer from the group consisting of maleic anhydride, itaconic anhydride and citraconic anhydride, preferably maleic anhydride, and/or
component B is at least one comonomer from the group consisting of ethene, propene, 1-butene, isobutene, 1-hexene, cyclopentene and cyclohexene, and/or
component C is at least one comonomer from the group consisting of aliphatic olefins having at least 10 carbon atoms.

10. A process for the preparation of copolymers as claimed in one of claims 6 to 9 by reacting the monomers indicated by free-radical copolymerization, preferably followed by at least partial hydrolysis and neutralization of the carboxyl groups fonned during the hydrolysis with bases.

## Revendications

1. Utilisation de dispersions ou de solutions aqueuses de copolymères, pouvant être obtenus par copolymérisation radicalaire de
(a) 20-90% en poids d'au moins un acide dicarboxylique en C₄-C₆ à insaturation monoéthylénique ou leurs anhydrides en tant que composant A,
(b) 5-50% en poids d'au moins une oléfine ayant 2-6 atomes de carbone en tant que composant B,
(c) 5-50% en poids d'au moins un comonomère hydrophobe choisi dans le groupe des oléfines à longue chaîne ayant au moins 10 atomes de carbone, des esters d'alcools à longue chaîne ayant au moins 8 atomes de carbone avec l'acide acrylique ou méthacrylique, des amides d'amides à longue chaîne ayant au moins 8 atomes de carbone avec l'acide acrylique ou méthacrylique et des alkylvinyléthers à longue chaîne ayant au moins 8 atomes de carbone en tant que composant C,
(d) 0-40% en poids d'autres comonomères copolymérisable avec les monomères ci-dessus en tant que composant D,
où la somme des quantités des composants A, B, C et éventuellement D s'élève à 100% en poids,
suivie d'une hydrolyse ou d'une estérification au moins partielle et d'une neutralisation et/ou d'une réaction des groupements carboxyle obtenus à l'issue de l'hydrolyse avec des bases, pour le traitement du cuir et/ou de la fourrure.

2. Utilisation selon la revendication 1, caractérisé en ce que l'on utilise lors de la copolymérisation
en tant que composant A, au moins un comonomère choisi dans le groupe formé par l'anhydride maléique, l'anhydride itaconique et l'anhydride citraconique, de préférence l'anhydride maléique et/ou
en tant que composant B, au moins un comonomère choisi dans le groupe formé par l'éthylène, le propène, le 1-butène, l'isobutène, le 1-hexène, le cyclopentène, le cyclohexène et/ou
en tant que composant C, au moins un comonomère à base d'oléfines aliphatiques ayant au moins 10 atomes de carbone et/ou
en tant que composant D, au moins un comonomère choisi dans le groupe formé par l'acide acrylique, l'acide méthacrylique, le méthylvinyléther, l'éthylvinyléther, l'acide 2-acrylamido-2-méthylpropanesulfonique, le (méth)acrylate de méthyle, le (méth)acrylate d'éthyle, le (méth)acrylate de butyle, le (méth)acrylate d'hydroxyéthyle, le (méth)acrylate d'hydroxypropyle, le (méth)acrylate de 2-(N,N-diméthylamino)éthyle, le (méth)acrylate de 3-(N,N-diméthylamino)propyle, le (méth)acrylamide de 3-diméthylaminopropyle, l'acétate de vinyle, le propionate de vinyle, le N-vinylformamide, le styrène, l'α-méthylstyrène, la N-vinylpyrrolidone, le N-vinylimidazole, l'acrylonitrile, l'acroléine et la méthacroléine.

3. Utilisation selon la revendication 1 ou 2, caractérisé en ce que l'on utilise les copolymères en tant qu'agent de retannage, de graissage ou rendant hydrophobe pour le cuir et/ou la fourrure, en particulier en tant qu'agent rendant hydrophobe.

4. Agent de traitement du cuir, contenant un mélange formé de
1-80% en poids d'un copolymère tel que défini dans l'une des revendications 1 à 3, et
20-99% en poids d'au moins une matière de tannage aromatique et synthétique (Syntans).

5. Procédé pour rendre hydrophobe des matériaux à base de cuir, en particulier le cuir ou la fourrure, caractérisé en ce que
dans une première étape, le matériau à base de cuir est traité avec une dispersion ou une solution aqueuse telle que définie dans l'une quelconque des revendications 1 à 3, ou avec un agent de traitement du cuir tel que défini en revendication 4, et
dans une deuxième étape, le matériau à base de cuir est ensuite traité pour désactiver l'hydrophilie du copolymère, en particulier à l'aide de sels de chrome.

6. Copolymère pouvant être obtenu par copolymérisation radicalaire de
(a) 20-89% en poids d'au moins un acide dicarboxylique en C₄-C₆ à insaturation monoéthylénique ou leurs anhydrides en tant que composant A,
(b) 5-50% en poids d'au moins une oléfine ayant 2-6 atomes de carbone en tant que composant B,
(c) 5-50% en poids d'au moins un comonomère hydrophobe choisi dans le groupe des oléfines à longue chaîne ayant au moins 10 atomes de carbone, des esters d'alcools à longue chaîne ayant au moins 8 atomes de carbone avec l'acide acrylique ou méthacrylique, des amides d'amides à longue chaîne ayant au moins 8 atomes de carbone avec l'acide acrylique ou méthacrylique et des alkylvinyléthers à longue chaîne ayant au moins 8 atomes de carbone en tant que composant C,
(d) 1-15% en poids d'autres comonomères copolymérisable avec les monomères ci-dessus en tant que composant D,
où la somme des quantités des composants A, B, C et D s'élève à 100% en poids, éventuellement suivie d'une hydrolyse ou d'une estérification au moins partielle et d'une neutralisation et/ou d'une réaction des groupements carboxyle obtenus à l'issue de l'hydrolyse avec des bases.

7. Copolymère selon la revendication 6, caractérisé en ce que l'on utilise lors de la copolymérisation
en tant que composant A, au moins un comonomère choisi dans le groupe formé par l'anhydride maléique, l'anhydride itaconique et l'anhydride citraconique, de préférence l'anhydride maléique et/ou
en tant que composant B, au moins un comonomère choisi dans le groupe formé par l'éthylène, le propène, le 1-butène, l'isobutène, le 1-hexène, le cyclopentène, le cyclohexène et/ou
en tant que composant C, au moins un comonomère à base d'oléfines aliphatiques ayant au moins 10 atomes de carbone et/ou
en tant que composant D, au moins un comonomère choisi dans le groupe formé par l'acide acrylique, l'acide méthacrylique, le méthylvinyléther, l'éthylvinyléther, l'acide 2-acrylamido-2-méthylpropanesulfonique, le (méth)acrylate de méthyle, le (méth)acrylate d'éthyle, le (méth)acrylate de butyle, le (méth)acrylate d'hydroxyéthyle, le (méth)acrylate d'hydroxypropyle, le (méth)acrylate de 2-(N,N-diméthylamino)éthyle, le (méth)acrylate de 3-(N,N-diméthylamino)propyle, le (méth)acrylamide de 3-diméthylaminopropyle, l'acétate de vinyle, le propionate de vinyle, le N-vinylformamide, le styrène, l'α-méthylstyrène, la N-vinylpyrrolidone, le N-vinylimidazole, l'acrylonitrile, l'acroléine et la méthacroléine.

8. Copolymère pouvant être obtenu par copolymérisation radicalaire de
(a) 20-89% en poids d'au moins un acide dicarboxylique en C₄-C₆ à insaturation monoéthylénique ou leurs anhydrides en tant que composant A,
(b) 5-50% en poids d'au moins une oléfine ayant 2-6 atomes de carbone en tant que composant B,
(c) 5-50% en poids d'au moins un comonomère hydrophobe choisi dans le groupe des oléfines à longue chaîne ayant au moins 10 atomes de carbone, des esters d'alcools à longue chaîne ayant au moins 8 atomes de carbone avec l'acide acrylique ou méthacrylique, des amides d'amides à longue chaîne ayant au moins 8 atomes de carbone avec l'acide acrylique ou méthacrylique et des alkylvinyléthers à longue chaîne ayant au moins 8 atomes de carbone en tant que composant C,
(d) 1-40% en poids d'au moins un comonomère choisi dans le groupe formé par l'acide acrylique, l'acide méthacrylique, le méthacrylate de méthyle, l'acrylate de N-N-diméthylaminoéthyle et le styrène en tant que composant D,
où la somme des quantités des composants A, B, C et éventuellement D s'élève à 100% en poids, éventuellement suivie d'une hydrolyse ou d'une estérification au moins partielle et d'une neutralisation au moins partielle et/ou d'une réaction des groupements carboxyle obtenus à l'issue de l'hydrolyse avec des bases.

9. Copolymère selon la revendication 8, caractérisé en ce que l'on utilise lors de la copolymérisation
en tant que composant A, au moins un comonomère choisi dans le groupe formé par l'anhydride maléique, l'anhydride itaconique et l'anhydride citraconique, de préférence l'anhydride maléique et/ou
en tant que composant B, au moins un comonomère choisi dans le groupe formé par l'éthylène, le propène, le 1-butène, l'isobutène, le 1-hexène, le cyclopentène, le cyclohexène et/ou
en tant que composant C, au moins un comonomère à base d'oléfines aliphatiques ayant au moins 10 atomes de carbone.

10. Procédé de préparation de copolymères selon l'une quelconque des revendications 6 à 9 par réaction des monomères mentionnés par copolymérisation radicalaire éventuellement suivie d'une hydrolyse au moins partielle et d'une neutralisation avec des bases des groupements carboxyle obtenus à l'issue de l'hydrolyse.
